# EUROPÄISCHE PATENTANMELDUNG

(11) **EP 0 699 985 A2**
(43) Veröffentlichungstag der Anmeldung: **06.03.1996**
(21) Anmeldenummer: 95113497.2
(22) Anmeldetag: 28.08.1995
(51) Int. Cl.: G05D 23/02

(54) **Thermostatventil für Plattenheizkörper**

(30) Priorität: 31.08.1994 DE 4431013
(71) Anmelder: METALLWERKE NEHEIM GOEKE & CO. GmbH, D-59755 Arnsberg (DE)
(72) Erfinder: Letzel, Helmut Ing., D 59755 Arnsberg (DE)
(74) Vertreter: Schröter, Martin, Dipl.-Ing.

(57) **Zusammenfassung**

Vorgeschlagen wird ein Thermostatventil für Plattenheizkörper, bei dem in einem Einbaustutzen 11 des Ventilgehäuses 1 ein Ventiloberteil 2 eingeschraubt ist mit einem darin axial einrichtbaren Schaftträger 3, dessen konisches Ende 32 zur Voreinstellung gegen ein Ventilsitzelement 7 wirkt, wobei der von außen im Schaftträger 3 gegen eine Rückstellfeder 4 verschiebbare Ventilschaft 5 in diesem Ventilsitzelement 7 eingreift. Dabei ist ein hülsenartiges Ventilsitzelement 7 im Einlaufstutzen 13 vom Gehäuseinneren her eingepreßt gehalten. Am konischen Ende 32 des Schaftträgers 3 ist eine zylindrische, abgesetzte Aufnahme 33 für die Montage des Ventilsitzelementes 7 vorgesehen. Durch axiale Verschiebung des im Ventiloberteil 2 eingeschraubten Schaftträgers 3 wird das Ventilsitzelement 7 in den Einlaufstutzen 13 eingepreßt.

## Beschreibung

Die Erfindung betrifft ein Thermostatventil für Plattenheizkörper nach dem Oberbegriff des Anspruchs 1. Ein solches Ventil ist bekannt aus der DE-U1 88 13 820.8, welches auch für die Verwendung an Plattenheizkörpern eingesetzt wird. Ein solches Thermostatventil besitzt ein Gehäuse, in welches auswechselbar ein Ventileinsatz eingeschraubt ist. Die Anordnung eines rohrförmigen Schaftträgers in einem rohrförmigen Sitzträger, an dessen Ende ein Ventilsitzelement ausgebildet ist, ermöglicht die Ausbildung einer stufenlos einrichtbaren Voreinstellung zur Erreichung der unterschiedlichen kᵥ-Werte (Durchflußquotient) unter Beibehaltung der Strömungszustände am eigentlichen Ventil, welches gebildet wird aus dem Verschlußstück und dem Ventilsitz im Sitzträger. In diesem Bereich erfolgt keine Änderung des Wasseraustrittes, da in diesem Bereich der Dichtkopf mit einer anderen vorgegebenen definierten Länge in die Bohrung im Gehäuseendteil eingreift. Als nachteilig erweist sich bei dieser bekannten Konstruktion, daß der Ventilsitz im Sitzträger nach der Montage nachgearbeitet werden muß zur Anpassung an die Gewindetoleranzen zwischen Sitzträger und Ventilgehäuse bzw. dessen Einbaustutzen. Diese Bearbeitung ist aber nur von der Einbauseite her möglich und erfordert relativ lange Bearbeitungswerkzeuge.

Die Aufgabe der Erfindung besteht darin, den nachträglichen Bearbeitungsaufwand nach der Montage am Ventilsitz zu vermeiden.

Gelöst wird diese Erfindungsaufgabe mit einem Thermostatventil mit den Merkmalen des Anspruches 1.

Die unabhängige Einordnung eines Ventilsitzelementes ermöglicht die zum Ventiloberteil bzw. dem darin geführten Ventilschaft fluchtende Einrichtung.

Um die notwendige Einrichtung des Ventilsitzelementes im Einlaufstutzen zu ermöglichen, wird die Maßnahme gemäß Anspruch 2 vorgeschlagen. In der Art eines Kugelsitzes nimmt das Ventilsitzelement bei der Montage automatisch eine zur Schaftachse ausgerichtete Position ein.

Aus dem DE-GM 94 00 509 ist ein Thermostatventil ohne Voreinstellung bekannt, bei welchem ebenfalls vom Gehäuseinneren her auf den Einlaufstutzen ein Ventilsitzelement aufgeschweißt ist. Bei einer solchen Konstruktion ist jedoch ebenfalls bereits wegen der Einschweißung dieses Ventilsitzelementes eine Nachbearbeitung des Ventilsitzelementes erforderlich, ebenso wie zur Anpassung an die Toleranzen des Gewindes zwischen Gewindeoberteil und Einbaustutzen des Ventilgehäuses.

Anhand eines abgebildeten Ausführungsbeispieles wird die Erfindung im folgenden näher erläutert. Es zeigen :
- Fig. 1: Einen Längsschnitt durch ein Thermostatventil für einen Plattenheizkörper und
- Fig. 2: eine vergrößerte Schnittdarstellung des Bereiches A in Figur 1.

Das dargestellte Thermostatventil besitzt das insgesamt mit der Ziffer 1 bezeichnete Ventilgehäuse, bestehend aus einem Einbaustutzen 11, dem Gehäusemittelteil 12 und einem an der gegenüberliegenden Seite eingesetzten Einlaufstutzen 13 sowie einem an der Rückseite vorgesehenen, in der Abbildung nicht erkennbaren Auslaufstutzen. Ein solches Gehäuse 1 ist zum Einbau zwischen zwei benachbarten Plattenheizkörpern bestimmt.

In das Innengewinde 14 des Einbaustutzens 11 ist abgedichtet mit einem Außengewinde 21 ein Ventiloberteil 2 eingeschraubt. In diesem Ventiloberteil 2 ist im Innengewinde 22 axial verschiebbar zur Voreinstellung und Festsetzung ein rohrförmiger Schaftträger 3 mit seinem Außengewinde 31 eingeordnet. Sein inneres konisches Ende 32 dient zur Voreinstellung.

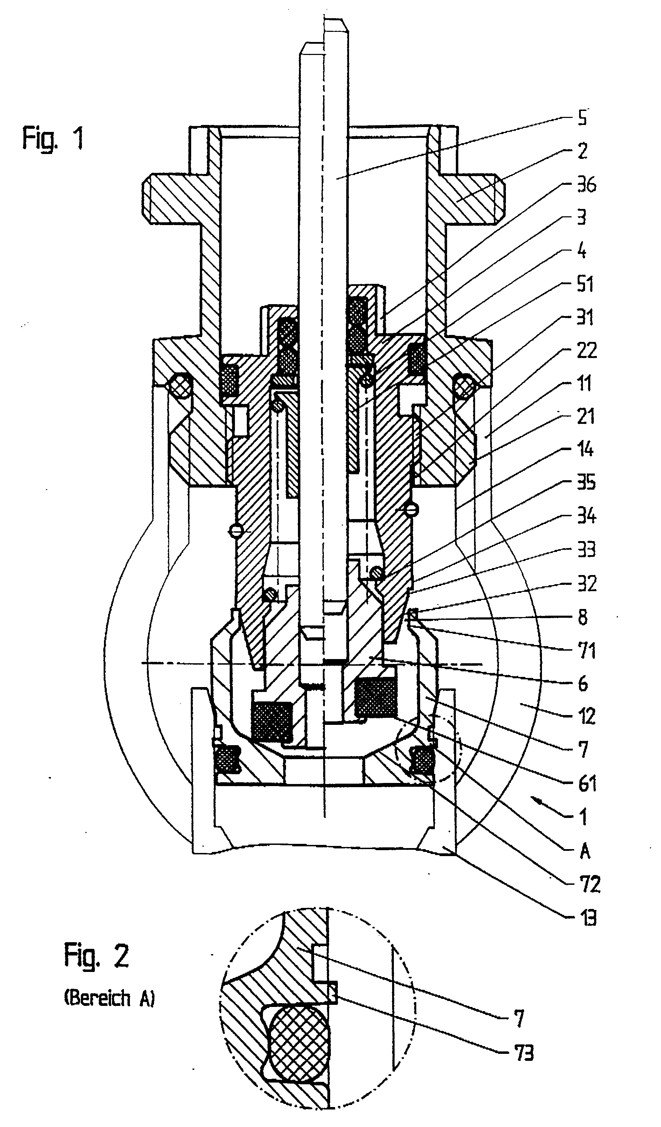

Zur Montage des mit der Ziffer 7 bezeichneten Ventilsitzelementes durch Einpressung im Einlaufstutzen 13 wird dieses Ventilsitzelement mit seiner oberen Kante 71 auf einer zylindrischen Aufnahme 33 am Schaftträger 3 vorläufig festgesetzt. Es liegt dabei mit seiner Stirnkante am Absatz 34 des Schaftträgers 3 an, wie etwa aus der linken Seite der Figur 1 zu erkennen ist, die gleichzeitig die Drosselstellung Null bildet.

Bei der entsprechenden Montage wird über den Schaftträger 3 das Ventilsitzelement 7 in den Einlaufstutzen 13 eingepreßt. Umlaufend ist außen an diesem Ventilsitzelement 7 ein Preßelement 73 angeformt, dessen Außendurchmesser geringfügig größer ist als der Innendurchmesser des Einlaufstutzens 13. Dieses Preßelement ist so schmal gehalten, so daß sich bei der Montage das Ventilsitzelement 7 in dem Einlaufstutzen 13 entsprechend ausrichtet.

Im Schaftträger 3 ist von außen verschiebbar der Ventilschaft 5 abgedichtet geführt, gegen den der nicht dargestellte Thermostat wirkt. Die Verschiebung erfolgt gegen den Rückstelldruck der Feder 4, die sich mit einem Ende an einem Innenabsatz 35 des Ventilschaftes und mit ihrem anderen Ende an einem am Ventilschaft 5 vorgesehenen Federabstützelement 51 abstützt. Am inneren Ende nimmt der Ventilschaft 5 das insgesamt mit der Ziffer 6 bezeichnete Verschlußstück auf, welches an seiner Außenseite den Dichtkegel 61 trägt. Dieser Dichtkegel wirkt gegen den innen im Ventilsitzelement 7 vorgesehenen Ventilsitz 72. Die linke Seite der Figur 1 zeigt die Verschlußstellung, die rechte Darstellung ist eine Öffnungsstellung. In dieser öffnungsstellung ist auch der durch entsprechende Voreinstellung des Schaftträgers 3 gebildete Drosselspalt 8 erkennbar. Er wird gebildet zwischen dem konischen Ende 32 des Schaftträgers 3 und der Kante 71 des Ventilsitzelementes 7. Die Voreinstellung kann verändert werden durch axiale Verschiebung des Schaftträgers 3 an seinen Schlüsselflächen 36.

## Patentansprüche

1. Thermostatventil für Plattenheizkörper, bei dem in einem Einbaustutzen (11) des Ventilgehäuses (1) ein Ventiloberteil (2) eingeschraubt ist mit einem darin axial einrichtbaren Schaftträger (3), dessen konisches Ende (32) zur Voreinstellung gegen ein Ventilsitzelement (7) wirkt, wobei der von außen im Schaftträger (3) gegen eine Rückstellfeder (4) verschiebbare Ventilschaft (5) mit einem endseitigen Verschlußstück (6) in diesem Ventilsitzelement (7) wirkt, welches in einem dem Einbaustutzen (11) gegenüberliegenden, zu diesem achsfluchtenden Einlaufstutzen (13) eingreift, **dadurch gekennzeichnet,** daß das hülsenartige Ventilsitzelement (7) im Einlaufstutzen (13) vom Gehäuseinneren her eingepreßt gehalten ist, wobei am konischen Ende (32) des Schaftträgers (3) eine zylindrische, abgesetzte Aufnahme (33) für die Montage des Ventilsitzelementes (7) vorgesehen ist, welches dazu durch axiale Verschiebung des im Ventiloberteil (2) eingeschraubten Schaftträgers (3) in den Einlaufstutzen (13) eingepreßt wird.

2. Thermostatventil nach Anspruch 1, **dadurch gekennzeichnet,** daß außen an dem Ventilsitzelement (7) ein durchmessergrößeres, umlaufendes Preßelement (73) ausgebildet ist.
